# EUROPÄISCHE PATENTANMELDUNG

(11) **EP 4 523 810 A1**
(43) Veröffentlichungstag der Anmeldung: **19.03.2025**
(21) Anmeldenummer: 24199457.3
(22) Anmeldetag: 10.09.2024
(51) Int. Cl.: B21D 19/04, B21D 39/02, B25J 9/16, G01L 5/00

(54) **ROLLFALZVORRICHTUNG, ROLLFALZVERFAHREN UND VERFAHREN ZUM EINSTELLEN EINES FALZPROZESSES**

(30) Priorität: 15.09.2023 DE 102023125038
(71) Anmelder: thyssenkrupp Automotive Body Solutions GmbH, 74076 Heilbronn (DE); thyssenkrupp AG, 45143 Essen (DE)
(72) Erfinder: Becker, Denis, 66679 Losheim am See (DE); Sehr, Benjamin, 66679 Losheim am See (DE); Mathieu, Alexander, 66679 Losheim am See (DE)
(74) Vertreter: thyssenkrupp Intellectual Property GmbH

(57) **Zusammenfassung**

Die vorliegende Erfindung betrifft ein Verfahren zum Einstellen eines Rollfalzprozesses zum Falzen einer Mehrzahl von gleichen Bauteilanordnungen (50), wobei eine an einem Roboter angeordnete Falzrolle (1) zur Umformung eines Falzflansches eines Bauteils einer Bauteilanordnung (50) mittels des Roboters entsprechend einer vorgegebenen Falzbahn (4) geführt wird, wobei eine während der Umformung von dem Roboter auf die Falzrolle (1) wirkende Falzprozesskraft (10) erfasst wird, die Falzprozesskraft (10) durch eine entsprechende Ansteuerung des Roboters verändert werden kann, und eine zu erreichende Soll-Falzqualität (20) vorgegeben wird. Der Roboter wird zur Erreichung der Soll-Falzqualität (20) unter Berücksichtigung der erfassten Falzprozesskraft (10) und einer aus der Umformung resultierenden Ist-Geometrie eines umgeformten Falzflansches gesteuert.

Ferner betrifft die Erfindung ein Rollfalzverfahren, das mit einem vorstehenden Verfahren eingestellt wird, und eine Rollfalzvorrichtung, die zur Ausführung der Verfahren ausgebildet ist.

## Beschreibung

Die Erfindung betrifft ein Verfahren zum Einstellen eines Rollfalzprozesses zum Falzen einer Mehrzahl von gleichen Bauteilanordnungen, wobei eine an einem Roboter angeordnete Falzrolle zur Umformung eines Falzflansches eines Bauteils einer Bauteilanordnung mittels des Roboters entsprechend einer vorgegebenen Falzbahn geführt wird, wobei der Roboter zur Beeinflussung einer Falzqualität des umgeformten Falzflansches mittels einer Steuereinheit gesteuert werden kann, wobei eine während der Umformung von dem Roboter auf die Falzrolle wirkende Falzprozesskraft erfasst wird und die Falzprozesskraft durch eine entsprechende Ansteuerung des Roboters mittels der Steuereinheit verändert werden kann. Des Weiteren betrifft die Erfindung ein Rollfalzverfahren sowie eine Rollfalzvorrichtung, die einen Falzroboter mit wenigstens einer an einem Roboterfalzkopf angeordneten Falzrolle, eine Steuereinheit, und eine Messtechnik aufweist.

Das Rollfalzen ist ein etabliertes Fügeverfahren in der Automobilindustrie zur Fertigung von Karosserieteilen im direkten und indirekten Sichtbereich. Haupteinsatzgebiet ist die Fertigung von Anbauteilen wie beispielsweise Heckklappen, Motorhauben und Türen.

Insbesondere in Produktionslinien, bei denen eine hohe Flexibilität im Hinblick auf Variantenvielfalt gefordert ist, wird das Falzen mittels einer robotergeführten Rolle, dem sogenannten Rollfalzen, dem herkömmlichen Maschinenfalzen vorgezogen. Grundlage für das Roboter-Rollfalzen ist eine der Bauteilkontur nachempfundene Bahn, die sogenannte Falzbahn, anhand derer die Falzrolle zur Umformung des Falzflansches geführt wird. Die bei diesem Vorgang durch den Roboter auf das Bauteil aufgebrachten Kräfte sind von mehreren Faktoren, wie Material, Flanschgeometrie, Blechdicke, Konturverlauf des Bauteils, abhängig. Hinzu kommen roboterspezifischen "Unschärfen", wie im Wesentlichen die Systemsteifigkeit im jeweiligen Arbeitspunkt und die Bahngeometrietreue der jeweiligen Robotertypen. Diese Abhängigkeiten erfordern in der Praxis bislang eine aufwendige Optimierung des Roboterprogramms bei der Inbetriebnahme, insbesondere durch indirekte Korrektur der Kraft und der Flanschangriffspunkte mittels eines relativen Versatzes zur neutralen, durch CAD-Daten (CAD: computer aided design) vorgegebenen Geometriebahn. Qualitätsoptimierungen erfolgen bei diesem Vorgehen durch manuelle, durch einen Fachmann vorgegebene Änderungen des Versatzes der Roboterbahn. Derartige Eingriffe setzen ein hohes verfahrensspezifisches Knowhow voraus, und bedürfen bis zum Erreichen der gewünschten Falzqualität regelmäßig vieler zeit- und kostenintensiver Optimierungsschleifen.

Aus der DE 10 2010 051 025 B4 ist darüber hinaus eine Rollenfalzvorrichtung mit einer an einem Roboterfalzkopf eines Falzroboters angeordneten Falzrolle, einer Steuereinheit und einer Messtechnik bekannt. Die Messtechnik umfasst dabei einen Positionsermittlungsteil zur Ermittlung einer Position der Falzrolle und einen zwischen Falzrolle und einem Gelenkbereich des Falzroboters angeordnetem Kraftmessteil. Die Steuereinheit ist dabei ausgebildet, unter Berücksichtigung von der Messtechnik bereitgestellter Werte die Position der Falzrolle derart zu steuern, dass eine die Falzrolle eine Vorgabe bezüglich einer Umformkraft umsetzt.

Zudem ist aus der WO 2013/149894 A1 eine Rollfalzvorrichtung bekannt, bei der die Falzrolle ebenfalls zur Erreichung einer vorgegebenen Umformkraft gesteuert werden kann, wobei die dazu erforderliche Stelleinrichtung dabei ausgebildet ist, variable Roboterelastizitäten zu kompensieren. Dadurch wird dem Umstand Rechnung getragen, dass der Falzroboter mit seinen Gliedern und Roboterachsen als ein elastisches System, das je nach Achsenstellung unterschiedliche Federsteifigkeiten aufweist, wirkt. Für eine vorgegebene Bahn können so Sollwert-Eingaben für eine Umformkraftvorgegeben werden, die von der Rollfalzvorrichtung ohne Eingriffe in die Bahnprogrammierung des Falzroboters umgesetzt werden.

Vor diesem Hintergrund ist es eine Aufgabe der vorliegenden Erfindung, ein verbessertes Verfahren zum Einstellen eines Rollfalzprozesses, ein verbessertes Rollfalzverfahren und eine verbesserte Roboterfalzvorrichtung bereitzustellen, womit insbesondere eine automatisierte Optimierung einer Falzqualität ermöglicht und weiter vorteilhaft auch eine Beibehaltung einer erreichten Falzqualität sichergestellt werden kann.

Zur Lösung dieser Aufgabe werden ein Verfahren gemäß Anspruch 1 sowie ein Rollfalzverfahren und eine Rollfalzvorrichtung gemäß den Ansprüchen 21 beziehungsweise 22 vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Einstellen, insbesondere zur automatisierten Optimierung, eines Rollfalzprozesses zum Falzen einer Mehrzahl von gleichen Bauteilanordnungen vor, wobei eine an einem Roboter angeordnete Falzrolle zur Umformung eines Falzflansches eines Bauteils einer Bauteilanordnung mittels des Roboters entsprechend einer vorgegebenen Falzbahn geführt wird. Der Roboter kann dabei zur Beeinflussung einer Falzqualität des umgeformten Falzflansches mittels einer Steuereinheit gesteuert werden, wobei eine während der Umformung von dem Roboter auf die Falzrolle wirkende Ist-Falzprozesskraft erfasst wird, und die Ist-Falzprozesskraft durch eine entsprechende Ansteuerung des Roboters mittels der Steuereinheit verändert werden kann. Weiter sieht das Verfahren vor, dass eine zu erreichende Soll-Falzqualität vorgegeben wird, insbesondere eine zu erreichende Soll-Falzqualität von der Steuereinheit vorgegeben wird, der Roboter zur Erreichung der Soll-Falzqualität unter Berücksichtigung der erfassten Ist-Falzprozesskraft und einer aus der Umformung resultierenden Ist-Geometrie eines umgeformten Falzflansches von der Steuereinheit gesteuert wird. Die resultierende Ist-Geometrie wird dabei insbesondere messtechnisch nach einer Umformung erfasst. Das Verfahren durchläuft vorteilhafterweise eine Mehrzahl von Iterationen vor, bis ein Rollfalzprozess entsprechend einer zu erreichenden Soll-Falzqualität eingestellt ist. Insofern werden die Verfahrensschritte insbesondere wiederholt durchgeführt, vorzugweise automatisiert wiederholt ausgeführt. Die Soll-Falzqualität wird dabei insbesondere durch eine Geometrie eines umgeformten Falzflansches definiert, wobei insbesondere die nachfolgenden Kriterien einzeln oder in beliebiger Kombination berücksichtigt werden können: ein Einrollwert; ein Packmaß; ein Außenradius; eine Lage des gefalzten Bauteils zu einem festgelegten Bezugspunkt; eine Flanschlänge; eine Flanschbreite. Für die Soll-Falzqualität können darüber hinaus insbesondere Vorgaben bezüglich eines Auftretens von Rissen in dem umgeformten Falzflansch, Vorgaben bezüglich einer Welligkeit des umgeformten Falzflansches und/oder Vorgaben bezüglich Oberflächenproblemen des umgeformten Falzflansches gemacht werden. Das Verfahren ist dabei insbesondere zum Einstellen beziehungsweise zum Optimieren eines Rollfalzprozesses für Karosseriebauteilanordnungen bei einer Serienfertigung vorgesehen.

Insbesondere sieht die Erfindung vorteilhafterweise vor, dass durch eine datentechnische Erfassung und Auswertung der relevanten Einflussgrößen, insbesondere der realen Falzprozesskraft, weiter insbesondere der realen Falzprozesskraft und deren Streuung, und vorteilhafterweise der Falzflanschgeometrie ein Regelverfahren zur zumindest teilautomatisierten Einstellung, insbesondere zur zumindest teilautomatisierten Optimierung, eines Rollfalzprozesses erstellt wird. Vorzugsweise erfolgt dabei zunächst eine entsprechende Handlungsempfehlung bezüglich der zur Einstellung beziehungsweise Optimierung notwendigen Maßnahmen, insbesondere eine Beeinflussung der Falzkräfte, insbesondere eine Veränderung der Falzkräfte aufgrund einer Veränderung der Roboterbahn und/oder eine Veränderung der Eingriffspositionen der Falzflächen beim robotergeführten Falzen. Darauffolgend werden die systemseitigen Handlungsempfehlungen vorteilhafterweise autonom abgebildet. Insbesondere können dabei selbstlernende Algorithmen, die insbesondere anwendungsspezifisch ausgebildet sein können, zur Reduktion der notwendigen Einstell- beziehungsweise Optimierungsschleifen genutzt werden.

Vorteilhafterweise wird während der Umformung des Falzflansches des Weiteren die Falzbahn erfasst. Insbesondere ist dabei vorgesehen, dass die vorgegebene Falzbahn durch ein entsprechendes Auslesen der Daten bezüglich der Vorgabe der Falzbahn erfasst wird. Besonders vorteilhaft wird die Falzbahn als eine Anzahl von diskreten Werten, insbesondere Punkten erfasst. Gemäß einer weiteren vorteilhaften Ausgestaltung wird die Ist-Falzbahn, also die tatsächliche Falzbahn für einen Falzvorgang, erfasst. Eine Erfassung der Falzbahn erfolgt dabei vorteilhafterweise durch eine Ermittlung aus der erfassten Ist-Falzprozesskraft und der erfassten Ist-Geometrie. Alternativ oder zusätzlich kann auch eine Ist-Falzbahn messtechnisch erfasst werden, insbesondere mittels optischer Sensorik, weiter insbesondere mittels wenigstens einer Kamera. Insbesondere ist bei dieser Ausgestaltung jeder Falzrolle eine eigene Kamera zugeordnet und entsprechend eingemessen. Vorteilhafterweise kann diese optische Sensorik dabei auch zur Bauteilvermessung verwendet werden. Weiter vorteilhaft ist eine Erfassung der Lage des Innenteils zum Zusammenbau über die Lage der jeweiligen Aufnahmelöcher durch ein optisches System vorgesehen, insbesondere durch die vorstehend genannte optische Sensorik. Insbesondere ist vorgesehen, dass im Rahmen der Erfassung der Falzbahn Punkte der Ist-Falzbahn, insbesondere Stützpunkte der Ist-Falzbahn, und vorteilhafterweise die dabei angewendeten Rollenverschiebungen erfasst werden. Durch die Erfassung der Falzbahn ist vorteilhafterweise eine Zuordnung der gemessenen Ist-Falzprozesskraft zu den Bahnpunkten realisierbar, insbesondere über eine zeitliche Korrelation. Mittels der Erfassung und Aufzeichnung der angewendeten Bahnverschiebungen wird vorteilhafterweise ein Steifigkeitsmodell am jeweiligen Bahnpunkt aufgebaut. Vorteilhafterweise kann eine Einstellung eines Rollfalzprozesses somit noch schneller erfolgen.

Gemäß einer besonders vorteilhaften Ausgestaltung des Verfahrens wird die Falzbahn für die Steuerung des Roboters mittels der Steuereinheit durch eine endliche Anzahl die Falzbahn repräsentierende Punkte beschrieben. Vorteilhafterweise ist die Falzbahn mittels dieser Punkte eindeutig definiert. Vorteilhafterweise kann so jedem Punkt der Falzbahn wenigstens eine Eigenschaft zugeordnet werden. Weiter vorteilhaft kann ein Rollfalzprozess mit hoher Präzision eingestellt beziehungsweise optimiert werden.

Vorteilhafterweise wird der Falzbahn eine Soll-Falzprozesskraft zugeordnet. Insbesondere ist vorgesehen, dass jedem Punkt der Falzbahn eine Soll-Falzprozesskraft zugeordnet wird. Für die gesamte Falzbahn ist somit vorteilhafterweise eine Soll-Falzprozesskraft vorgegeben, mit der ein Falzvorgang durchgeführt werden soll. Die Soll-Falzprozesskraft kann insbesondere über die Steuereinheit vorgegeben werden. Die Soll-Falzprozesskraft kann dabei insbesondere über eine Mensch-Maschine-Schnittstelle vorgegeben werden, insbesondere eine initiale Soll-Falzprozesskraft. Darüber hinaus sieht eine vorteilhafte Ausgestaltung vor, dass der einzustellende Rollfalzprozess mittels einer rechnergestützten Simulation nachgebildet wird, wobei die jedem Punkt der Falzbahn zugeordnete Soll-Falzprozesskraft vorteilhafterweise aus dieser Simulation bereitgestellt, insbesondere als initiale Prozessführungsparameter; und vorteilhafterweise automatisch den Punkten zugeordnet wird.

Weiter vorteilhaft wird der Falzbahn eine Ist-Falzprozesskraft zugeordnet. Vorzugsweise wird dazu jedem Punkt der Falzbahn eine an diesem Punkt erfasste Ist-Falzprozesskraft zugeordnet. Die Ist-Falzprozesskraft wird vorteilhafterweise während einer Umformung eines Falzflansches messtechnisch erfasst. Insbesondere ist dabei vorgesehen, dass zwischen Roboterflansch und Falzrolle ein Messelement angeordnet ist, sodass ein Kraftfluss durch das Messelement geleitet werden kann. Gemäß einer vorteilhaften Ausgestaltung ist vorgesehen, dass der Roboter einen Roboterfalzkopf mit einem Anbindungselement, einem Verbindungselement und einem Kopfelement, an dem die Falzrolle angeordnet ist, umfasst. Das Verbindungselement ist dabei vorteilhafterweise zwischen dem Anbindungselement und dem Kopfelement angeordnet, wobei zumindest ein Teil des Verbindungselements als Messkörper ausgestaltet ist. Der Messkörper mit wenigstens einem an dem Messkörper angeordneten Sensorelement erfasst vorteilhafterweise die Ist-Falzprozesskraft. Es ist somit insbesondere vorgesehen, dass die Ist-Falzprozesskraft online, also während der Umformung eines Falzflansches erfasst und vorteilhafterweise der aktuellen Position der Falzbahn zugeordnet wird. Vorteilhafterweise kann durch eine Auswertung der Abweichung zwischen der Ist-Falzprozesskraft und der Soll-Falzprozesskraft der Roboter so gesteuert werden, dass die Ist-Falzprozesskraft an die Soll-Falzprozesskraft herangeführt wird. Der Rollfalzprozess kann so vorteilhafterweise optimiert werden.

Des Weiteren sieht das Verfahren vorteilhafterweise vor, dass der Falzbahn eine Soll-Geometrie für einen umgeformten Falzflansch zugeordnet wird, insbesondere eine Soll-Geometrie als die zu erreichende Soll-Falzqualität. Insbesondere wird dabei jedem Punkt der Falzbahn eine Soll-Geometrie für einen umgeformten Falzflansch zugeordnet, wobei vorzugsweise durch die zugeordnete Soll-Geometrie die zu erreichende Soll-Falzqualität vorgegeben wird.

Vorteilhaferweise wird die Soll-Falzqualität also vorgegeben, indem jedem Punkt der Falzbahn eine Soll-Geometrie für einen umgeformten Falzflansch zugeordnet wird. Die Soll-Geometrie umfasst dabei insbesondere einzeln oder in beliebiger Kombination die folgenden Parameter:
einen Einrollwert; ein Packmaß; einen Außenradius; eine Lage des gefalzten Bauteils zu einem festgelegten Bezugspunkt; eine Flanschlänge; eine Flanschbreite. Insofern können einem Punkt einer Falzbahn eine Vielzahl von Parametern zugeordnet werden.

Besonders vorteilhaft wird für einen umgeformten Falzflansch eine Ist-Geometrie erfasst. Eine erfasste Ist-Geometrie eines umgeformten Falzflansches wird dann vorteilhafterweise der Falzbahn zugeordnet. Insbesondere wird jedem Punkt der Falzbahn eine an diesem Punkt erfasste Ist-Geometrie eines umgeformten Falzflansches zugeordnet. Das Erfassen einer Ist-Falzprozesskraft bei zusätzlicher Erfassung einer Ist-Geometrie für einen umgeformten Falzflansch ist besonders vorteilhaft, weil auf diese Weise schneller ein Rollfalzprozess mit einer vorgegebenen Soll-Falzqualität eingestellt werden kann, was vorteilhafterweise das Einstellen des Rollfalzprozesses kostengünstiger macht. Insbesondere ist vorgesehen, dass die Erfassung der Ist-Geometrie erfolgt, nachdem eine Umformung eines Falzflansches entsprechend der vorgegebenen Falzbahn abgeschlossen ist. Dazu ist insbesondere vorgesehen, dass die Ist-Geometrie mit einer separaten Messfahrt, die der vorgegebenen Falzbahn zugeordnet ist, erfasst wird, wobei die Messfahrt insbesondere mittels des Roboters ausgeführt wird. Die Geometrie, insbesondere die Ist-Geometrie für einen umgeformten Falzflansch, wird dabei vorzugsweise mittels eines optischen Systems, insbesondere unter Anwendung eines optischen Verfahrens, weiter insbesondere mittels Lasertriangulation oder kamerabasiert erfasst. Alternativ oder zusätzlich ist eine Erfassung der Ist-Geometrie für einen umgeformten Falzflansch mittels eines haptischen Systems, insbesondere mittels einer taktilen Messeinrichtung, vorgesehen. Insbesondere kann dazu eine Messrolle beziehungsweise eine Messrollenanordnung an dem umgeformten Falzflansch entlang bewegt werden.

Gemäß einer vorteilhaften Ausgestaltungsvariante ist aber auch vorgesehen, dass die Ist-Geometrie für einen umgeformten Falzflansch online erfasst wird, also während eines Falzprozesses und somit insbesondere im Wesentlichen direkt nach einer Umformung eines Falzflansches erfolgt. Insbesondere bei einer solchen online-Erfassung ist vorteilhafterweise vorgesehen, dass eine Multikameraanordnung einen Falzflansch, der unmittelbar vor einer Falzrollenposition und unmittelbar hinter der Falzrollenposition liegt, erfasst, wobei die erfassten Bilddaten insbesondere zur Bestimmung der Ist-Geometrie ausgewertet werden. Die Multikameraanordnung ist dabei bevorzugt an dem Roboter, insbesondere an dem Roboterkopf, angeordnet.

Eine weitere vorteilhafte Ausgestaltung sieht eine Erfassung einer Ist-Geometrie für einen noch ungeformten Falzflansch vor, also vorteilhafterweise eine Ist-Geometrie vor einer Umformung des Falzflansches, insbesondere einer Ist-Geometrie eines noch nicht vollständig umgeformten Falzflansches, also eines vorgefalzten Falzflansches vor. Vorteilhafterweise wird jedem Punkt der Falzbahn eine an diesem Punkt erfasste Ist-Geometrie für den noch ungeformten Falzflansch zugeordnet. Vorteilhafterweise kann mit dieser Ausgestaltung somit ein Ursprungszustand eines Falzflansches vor einer Umformung beziehungsweise einer weiteren Umformung des Falzflansches erfasst werden. Dazu ist insbesondere vorgesehen, dass die Ist-Geometrie mit einer separaten Messfahrt, die der vorgegebenen Falzbahn zugeordnet ist, erfasst wird, wobei die Messfahrt insbesondere mittels des Roboters ausgeführt wird. Bevorzugt wird einer oder eine beliebige Kombination der nachfolgend angeführten Parameter bezüglich der Ist-Geometrie vor einer Umformung des Falzflansches erfasst: ein Öffnungswinkel; eine Flanschlänge, ein erzielter Vorfalzwinkel; eine Lage des ungefalzten Bauteils zu einem festgelegten Bezugspunkt; eine Lages des vorgefalzten Bauteils zu einem festgelegten Bezugspunkt; ein Block-Luft-Maß. Die Ist-Geometrie vor einer Umformung des Falzflansches wird vorteilhafterweise mittels derselben Messtechnik erfasst, wie die Ist-Geometrie nach einer Umformung des Falzflansches. Die Geometrie, insbesondere die Ist-Geometrie vor einer Umformung des Falzflansches und/oder die Ist-Geometrie eines umgeformten Falzflansches, wird also vorteilhafterweise mittels eines optischen Systems, und/oder mittels eines haptischen Systems erfasst. Für die Geometrie wird vorteilhafterweise wenigstens eines der nachfolgend genannten Kriterien erfasst: ein Einrollwert; ein Packmaß; ein Außenradius; ein erzielter Vorfalzwinkel; ein Öffnungswinkel; eine Lage des ungefalzten Bauteils zu einem festgelegten Bezugspunkt; eine Lages des gefalzten Bauteils zu einem festgelegten Bezugspunkt; ein Block-Luft-Maß; eine Flanschlänge; eine Flanschbreite.

Weiter vorteilhaft wird der vorgegebenen Falzbahn ein geltendes Steifigkeitsmodell für den Roboter zugeordnet. Vorteilhafterweise berücksichtigt das Steifigkeitsmodell dabei die individuelle Anordnung einer Falzrolle an dem Roboter, insbesondere an dem Roboterflansch. Vorzugsweise werden dabei jedem Punkt der Falzbahn eine für diesen Punkt geltende Steifigkeit bzw. Federkonstante zugeordnet. Insbesondere kann vorgesehen sein, dass die erfassten Steifigkeiten zur Bildung eines Modells genutzt werden, mithilfe dessen auf eine Soll-Falzqualitätsvorgabe, wie beispielsweise "zweizehntel Millimeter weniger einrollen", verbessert reagiert werden kann, und somit ein entsprechender Falzprozess schneller eingestellt werden kann. Insbesondere hilft das Steifigkeitsmodell vorteilhafterweise dabei, die unterschiedlichen Steifigkeiten beziehungsweise die unterschiedlichen Federkonstanten des Roboters je nach Stellung der einzelnen Rotorglieder und der Streckung des Roboters ausgleichen zu können.

Insbesondere kann für das Kennfeld jedem Punkt einer vorgegebenen Falzbahn eine für diesen Punkt geltende Federkonstante für den Roboter zugeordnet werden.

Zur Erreichung der Soll-Falzqualität, und somit insbesondere zur Heranführung der Ist-Falzqualität an die Soll-Falzqualität, weiter insbesondere zur Heranführung der Ist-Geometrie an die Soll-Geometrie, wird bei dem Verfahren vorteilhafterweise eine Anstellung der Falzrolle variiert, wobei das Variieren der Falzrolle vorzugsweise über den Roboter erfolgt. Durch ein Variieren, wie die Falzrolle in Bezug auf den umzuformenden Falzflansch angestellt ist, kann vorteilhafterweise die Falzprozesskraft beeinflusst werden. Weiter kann insbesondere durch eine veränderte Anstellung der Falzrolle ein Flanschöffnungswinkel entsprechend beeinflusst werden.

Eine weitere vorteilhafte Ausgestaltung des Verfahrens sieht vor, dass die bei einem ersten Falzvorgang erfasste Ist-Größe, insbesondere die erfasste Ist-Falzprozesskraft und/oder die erfasste Ist-Geometrie eines umgeformten Falzflansches, in einem nachfolgenden zweiten Falzvorgang an die Soll-Größe, insbesondere die Soll-Falzqualität, weiter insbesondere die Soll-Geometrie und/oder die Soll-Falzprozesskraft, herangeführt werden. Dabei ist insbesondere vorgesehen, dass in dem ersten Falzvorgang ein Falzflansch einer ersten Bauteilanordnung umgeformt wird und in dem zweiten Falzvorgang ein Falzflansch einer zweiten Bauteilanordnung umgeformt wird. Des Weiteren ist aber insbesondere auch vorgesehen, dass in dem ersten Falzvorgang ein Falzflansch einer ersten Bauteilanordnung im Rahmen eines Vorfalzens umgeformt wird und in dem zweiten Falzvorgang dieser Falzflansch der ersten Bauteilanordnung als weiterer (Vor-)Falzschritt umgeformt wird. Die Heranführung der Ist-Größe an die Soll-Größe kann also insbesondere über mehrere Vorfalzvorgänge erfolgen und/oder über eine Vielzahl von Fertigfalzvorgängen, erfolgen, also insbesondere in einem Iterationsprozess. Bei dieser Ausgestaltung erfolgt also insbesondere keine Heranführung der Ist-Größe an die Soll-Größe während eines laufenden Falzvorgangs. Eine solche Ausgestaltung kann allerdings zur schnelleren Einstellung eines Rollfalzprozesses vorgesehen werden, wenn die Ist-Geometrie online erfasst wird. Vorteilhafterweis ist bei einer solchen Ausgestaltung dann vorgesehen, dass unter Berücksichtigung während eines ersten Falzvorgangs erfasster Ist-Größen für bereits gefalzte Punkte der Falzbahn für nachfolgende Punkte der Falzbahn der Roboter mit dem Ziel gesteuert wird, die Differenz zwischen Ist-Größen und Soll-Größen zu verringern.

Gemäß einer weiteren besonders vorteilhaften Ausgestaltungsvariante des Verfahrens wird der Falzprozess, insbesondere der einzustellende Rollfalzprozess, zusätzlich in einem rechnergestützten Simulationsmodell simuliert. Die Simulation kann dabei insbesondere parallel zu dem tatsächlichen Falzvorgang ausgeführt werden, was insbesondere bedeutet, dass eine Vielzahl dieser Simulationen parallel zu einem realen Falzvorgang ausgeführt werden können. Vorteilhafterweise werden bei der Ausführung des realen Verfahrens erfasste Ist-Größen, insbesondere die Ist-Falzprozesskraft und/oder die Ist-Geometrie eines umgeformten Falzflansches und/oder die Ist-Geometrie eines noch ungeformten Falzflansches, an das Simulationsmodell übergeben. Dem Simulationsmodell zugrunde gelegte Größen für die Ist-Größen, die insbesondere auf durchgeführten Berechnungen basieren können, werden dann vorteilhafterweise durch die übergebenen Ist-Größen ersetzt. Unter Berücksichtigung dieser Ist-Größen und der zu erreichenden Soll-Falzqualität wird dann vorteilhafterweise eine Anstellung der Falzrolle über den Roboter simuliert, insbesondere bis die Soll-Falzqualität in dem Simulationsmodell erreicht ist. Weiter vorteilhaft wird dann mit dieser simulierten Anstellung der Falzrolle der nächste reale Falzvorgang zum Einstellen des Rollfalzprozesses durchgeführt. Vorteilhafterweise kann hierdurch ein Rollfalzprozess noch schneller eingestellt werden. Weiter vorteilhaft kann die Simulation vorlaufend zu dem realen Falzprozess ausgeführt werden, insbesondere in Ergänzung zu einer parallelen Ausführung. Vorteilhafterweise werden von dem rechnergestützten Simulationsmodell bestimmte Simulationswerte als initiale Prozessführungsparameter für das Verfahren zum Einstellen eines Rollfalzprozesses vorgegeben. Vorteilhafterweise kann hierdurch ein Rollfalzprozess noch schneller eingestellt werden.

Insbesondere ist vorgesehen, dass das Verfahren zum Einstellen eines Rollfalzprozesses als Verfahren zur Optimierung einer Falzqualität, insbesondere für ein nachfolgendes Rollfalzen einer Vielzahl gleicher Bauteilanordnungen, und/oder als Zwischenverfahren zur Sicherstellung einer Falzqualität, insbesondere während eines bereits eingestellten Rollfalzprozesses, durchgeführt wird.

Des Weiteren wird ein Rollfalzverfahren zum Falzen, insbesondere zum zumindest teilautomatisierten Falzen, einer Mehrzahl von gleichen Bauteilanordnungen vorgeschlagen, wobei eine an einem Roboter angeordnete Falzrolle zur Umformung eines Falzflansches eines Bauteils einer Bauteilanordnung mittels des Roboters entsprechend einem eingestellten Rollfalzprozess mit einer vorgegebenen Falzbahn geführt wird, wobei der Rollfalzprozess gemäß einem erfindungsgemäß ausgebildeten Verfahren eingestellt wird. Das Einstellen des Rollfalzprozesses erfolgt dabei insbesondere vor dem Beginn des für die Fertigung erfolgenden Falzens der Mehrzahl der gleichen Bauteilanordnungen und/oder während des für die Fertigung erfolgenden Falzens der Mehrzahl der gleichen Bauteilanordnungen, wobei in diesem Fall vorteilhafterweise weiter dazu beigetragen wird, dass eine gleichbleibende Falzqualität sichergestellt werden kann.

Darüber hinaus wird eine Rollfalzvorrichtung vorgeschlagen, die einen Falzroboter mit wenigstens einer an einem Roboterfalzkopf angeordneten Falzrolle, eine Steuereinheit, und eine Messtechnik umfasst, wobei die Rollfalzvorrichtung zur Ausführung eines erfindungsgemäß ausgebildeten Verfahrens ausgebildet ist. Insbesondere ist vorgesehen, dass die Rollfalzvorrichtung als Messtechnik eine erste Messtechnik zur Erfassung einer Falzprozesskraft und eine zweite Messtechnik zur Erfassung einer Falz-Geometrie, insbesondere einer Ist-Geometrie eines umgeformten Falzflansches und/oder einer Ist-Geometrie eines noch ungeformten Falzflansches, umfasst. Insbesondere ist weiter vorgesehen, dass der Falzroboter einen Roboterfalzkopf mit einem Anbindungselement, einem Verbindungselement und einem Kopfelement, an dem die Falzrolle angeordnet ist, umfasst. Das Verbindungselement ist dabei vorteilhafterweise zwischen dem Anbindungselement und dem Kopfelement angeordnet, wobei zumindest ein Teil des Verbindungselements als Messkörper ausgestaltet ist. Der Messkörper mit wenigstens einem an dem Messkörper angeordneten Sensorelement ist dabei vorteilhafterweise zur Erfassung einer Ist-Falzprozesskraft ausgebildet, und somit insbesondere als die erste Messtechnik. Die zweite Messtechnik kann vorteilhafterweise ein optisches System und/oder ein haptisches System umfassen, wobei das jeweilige System dazu eingerichtet ist, die Ist-Geometrie zu erfassen, insbesondere mittels Lasertriangulation oder kamerabasiert. Vorteilhafterweise kann ein Multikamerasystem von der Rollfalzvorrichtung als zweite Messtechnik umfasst sein, wobei das Multikamerasystem vorzugsweise an dem Roboterfalzkopf angeordnet ist.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer vereinfachten Darstellung ein Ausführungsbeispiel für eine erfindungsgemäß ausgebildete Rollfalzvorrichtung;
- Fig. 2: in einer perspektivischen Darstellung ein Ausführungsbeispiel für einen Roboterfalzkopf einer erfindungsgemäß ausgebildeten Rollfalzvorrichtung;
- Fig. 3a: in einer schematischen Darstellung eine Bauteilanordnung mit erfassten Parametern bezüglich einer Ist-Geometrie vor einem Falzvorgang;
- Fig. 3b: in einer schematischen Darstellung eine Bauteilanordnung mit erfassten Parametern bezüglich einer Ist-Geometrie nach einem Vorfalzvorgang;
- Fig. 3c: in einer schematischen Darstellung eine Bauteilanordnung mit erfassten Parametern bezüglich einer Ist-Geometrie nach einem abschließenden Falzvorgang;
- Fig. 4: in einer schematischen Darstellung eine Bauteilanordnung mit einem optischen System zur Erfassung einer Ist-Geometrie eines Falzflansches;
- Fig. 5a: in einer schematischen Darstellung ein Ausführungsbeispiel für ein erfindungsgemäß ausgebildetes Verfahren zum Einstellen eines Rollfalzprozesses zum Falzen einer Mehrzahl von gleichen Bauteilanordnungen; und
- Fig. 5b: ein Ablaufdiagramm zur Erläuterung eines weiteren Ausführungsbeispiels für ein erfindungsgemäß ausgebildetes Verfahren zum Einstellen eines Rollfalzprozesses zum Falzen einer Mehrzahl von gleichen Bauteilanordnungen.

In den verschiedenen Figuren sind gleiche Teile in der Regel mit den gleichen Bezugszeichen versehen und werden daher mitunter auch jeweils nur im Zusammenhang mit einer der Figuren erläutert.

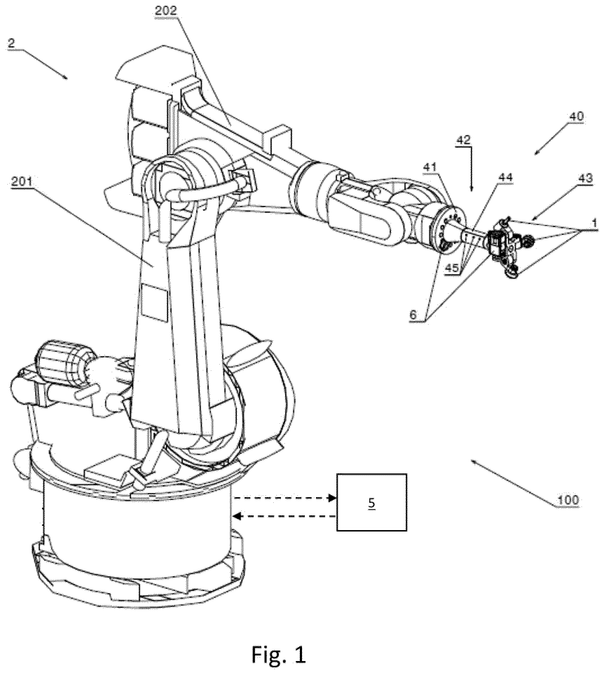

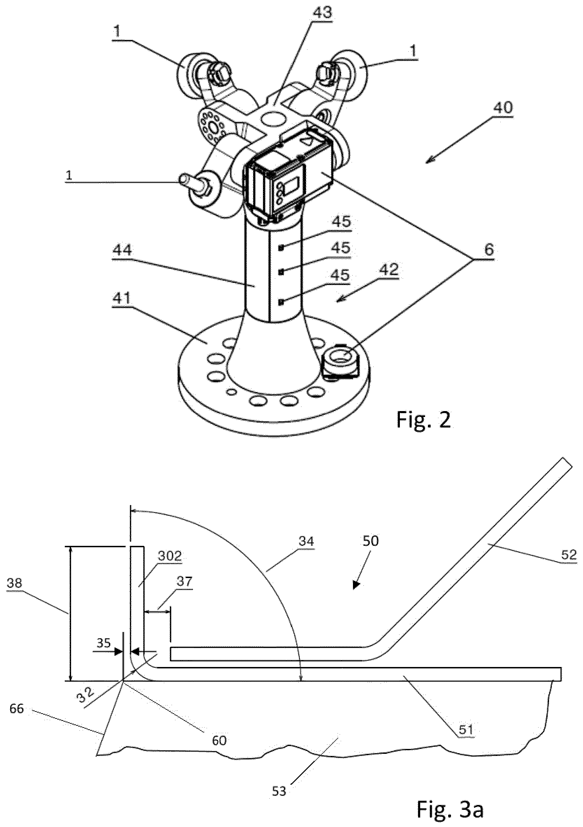

Fig. 1 zeigt in einer schematischen Darstellung ein Ausführungsbeispiel für eine erfindungsgemäß ausgebildete Rollfalzvorrichtung 100 mit einem Falzroboter 2 und einer Steuereinheit 5. Der Roboter 2 umfasst einen gelenkig ausgebildeten Roboterarm, der in diesem Ausführungsbeispiel ein erstes Glied 201 und ein zweites Glied 202 umfasst. An dem Ende des Roboterarms ist ein Roboterfalzkopf 40 angeordnet. Dabei wird zur Erfassung einer Ist-Falzprozesskraft ein Kraftfluss von dem Roboterflansch zur Falzrolle 1 durch eine Messeinheit geleitet. Eine vorteilhafte Ausgestaltung für einen Roboterfalzkopf 40 ist in Fig. 2 beispielhaft dargestellt. Der Roboterfalzkopf 40 umfasst ein Anbindungselement 41, ein Verbindungselement 42, ein Kopfelement 43, die insbesondere als ein einstückiges Bauteil ausgebildet sein können, und mehrere Falzrollen 1, die jeweils an dem Kopfelement 13 angeordnet sind, und die jeweils für unterschiedliche Falzvorgänge verwendet werden können. Das Verbindungselement 42 ist zwischen dem Anbindungselement 41 und dem Kopfelement 43 angeordnet. Das Verbindungselement 42 ist dabei als Messkörper 44 ausgestaltet, wobei der Messkörper 44 mit mehreren an dem Messkörper 44 angeordneten Sensorelementen 45 zur Erfassung von bei einem Falzvorgang mittels einer der Falzrollen 1 auf einen Falzflansch ausgeübten Falzkraft (Ist-Falzkraft) ausgebildet ist. Der Messkörper 44 bildet dabei in diesem Ausführungsbeispiel zusammen mit den Sensorelementen 45 eine Sensoreinheit zur Erfassung der Falzkraft. Mit einer jeweiligen Falzrolle 1 kann eine auf einem Falzbett angeordnete Bauteilanordnung gefalzt werden. Eine solche Bauteilanordnung umfasst dabei insbesondere ein erstes Bauteil und ein zweites Bauteil, weiter insbesondere ein erstes Karosseriebauteil und ein zweites Karosseriebauteil für ein Kraftfahrzeug.

Durch Umkanten eines Bauteilrandes des ersten Bauteils mittels einer der Falzrollen 1 können das erste Bauteil und das zweite Bauteil entsprechend einer vorgegebenen Falzbahn zusammengefügt werden. Während dieses Zusammenfügens kann mittels des Messkörpers 44 und der daran angeordneten Sensorelemente 45 eine Ist-Falzprozesskraft erfasst werden. Die Falzbahn wird dabei für das Steuern des Roboters 2 mittels der Steuereinheit 5 durch eine endliche Anzahl die Falzbahn repräsentierende Punkte beschrieben. Jedem Punkt der Falzbahn wird dabei während des Zusammenfügens, also während des Falzens, eine erfasste Ist-Falzprozesskraft zugeordnet. Darüber hinaus umfasst der Roboterfalzkopf 40 einer Sensoreinrichtung 6, insbesondere ein optisches System, zur digitalen Geometrie- und Lageerfassung mittels Lasertriangulation. Mittels dieser Sensoreinrichtung 6 ist die Rollfalzvorrichtung 100 ausgebildet, die Geometrie eines ungeformten sowie eines umgeformten Falzflansches der Bauteilanordnung zu erfassen. Hierzu führt der Roboter 2 in diesem Ausführungsbeispiel eine extra Messfahrt, die durch die Falzbahn vorgegeben wird, aus ohne dabei zu falzen. Vorteilhafterweise ist die Rollfalzvorrichtung 100 zur Ausführung eines erfindungsgemäß ausgebildeten Verfahrens ausgebildet. Weitere Details einer vorteilhaften Ausgestaltung des Roboterfalzkopfes 40 des Roboters 2 der Rollfalzvorrichtung 100 werden unter Bezugnahme auf Fig. 2 erläutert.

Wie in Fig. 2 beispielhaft dargestellt, umfasst der Roboterfalzkopf 40 ein Anbindungselement 41, ein Verbindungselement 42, ein Kopfelement 43 und mehrere Falzrollen 1, wobei das Verbindungselement 42 zwischen dem Anbindungselement 41 und dem Kopfelement 43 angeordnet ist, und die Falzrollen 1 an dem Kopfelement 43 angeordnet sind. Die Falzrollen 1 sind dabei unterschiedlich ausgebildet und sternförmig an dem Kopfelement 43 angeordnet, wobei unter Verwendung eines Roboters 2 mittels der unterschiedlich ausgebildeten Falzrollen 1 unterschiedliche Falzvorgänge ausgeführt werden können, insbesondere an unterschiedliche Bauteilanordnungen und/oder an unterschiedliche Bauteilgeometrien angepasste Falzvorgänge.

Ein Teil des Verbindungselements 42 des Roboterfalzkopfs 40 ist als Messkörper 44 ausgestaltet, wobei an dem Messkörper 44 mehrere Sensorelemente 45, insbesondere mehrere Dehnungsmessstreifen mit vorzugsweise unterschiedlicher Ausrichtung, angeordnet sind. Der Messkörper 44 bildet dabei mit den Sensorelementen 45 eine Sensoreinheit, die zur Erfassung von bei einem Falzvorgang mittels einer der Falzrollen 1 auf einen Falzflansch ausgeübten Falzprozesskraft ausgebildet ist. Wie in Fig. 2 gezeigt, kann der Messkörper 44 insbesondere säulenförmig ausgebildet sein. Darüber hinaus ist der Messkörper 44 elastisch verformbar ausgebildet, wobei die an dem Messkörper 44 angebrachten Sensorelemente 45 zur Erfassung einer elastischen Verformung des Messkörpers 44 ausgebildet sind. Der Messkörper 44 kann vorteilhafterweise durch Ausnehmungen und Streben (in Fig. 2 nicht explizit dargestellt) fachwerkartig aufgebaut sein, und weist insbesondere ein definiertes elastisches Verformungsverhalten auf, sodass auftretende Verformungen vorteilhafterweise eindeutig konkreten Falzprozesskräften zugeordnet werden können.

Das Anbindungselement 41 des Roboterfalzkopfs 40 ist in diesem Ausführungsbeispiel als Andockplatte ausgebildet, mit der der Roboterfalzkopf 40 an einem Roboterarm eines Roboters 2, wie in dem Ausführungsbeispiel in Fig. 1 gezeigt, angeordnet werden kann. An dem Roboterfalzkopf 40 kann eine Recheneinheit (in Fig. 2 nicht explizit dargestellt) angeordnet sein, die ausgebildet ist, von den Sensorelementen 45 bereitgestellte Sensorsignale zu erfassen und zu verarbeiten, und die so verarbeiteten Daten an eine Steuereinheit 5 einer Rollfalzvorrichtung 100, wie in Fig. 1 beispielhaft dargestellt, zur weiteren Verwendung weiterzuleiten. Insbesondere ist aber auch vorgesehen, dass die Sensorsignale direkt an eine Steuereinheit 5 einer Rollfalzvorrichtung 100 übertragen werden. Je nach Ausgestaltung umfasst die Recheneinheit beziehungsweise die Steuereinheit 5 vorteilhafterweise eine Mikroprozessoreinheit sowie einen Messverstärker (Mikroprozessoreinheit und Messverstärker in den Figuren nicht explizit dargestellt) zur Verarbeitung der an dem Messkörper 44 aufgezeichneten (Dehnungs-)Signale. In der Steuereinheit 5 ist vorteilhafterweise zudem jeweils ein Soll-Falzprozesskraftverlauf einer Falzkraft für vorgegebene Falzbahnen hinterlegt, und dazu in einer entsprechenden Speichereinheit der Mikroprozessoreinheit gespeichert. Eine jeweilige Falzbahn ist dabei in der Steuereinheit 5 durch eine Vielzahl von Punkten dargestellt, wobei jedem der Punkte einer Soll-Falzprozesskraft für den jeweiligen Punkt zugeordnet ist.

Die Recheneinheit beziehungsweise die Steuereinheit 5 ist zudem ausgebildet, aus den mittels der an dem Messkörper 44 angeordneten Sensorelemente 45 erfassten Sensorsignalen einen Ist-Falzprozesskraftverlauf bei einem Falzvorgang zu erfassen. Dabei ist vorgesehen, dass bei der Durchführung eines Falzvorgangs entsprechend einer vorgegebenen Falzbahn, wobei eine der Falzrollen 1 des Roboterfalzkopfs 40 gemäß einer vorgegebenen Falzbahn an einer Bauteilanordnung entlanggeführt wird, für die jeweiligen Punkte der Falzbahn die an diesen Punkten auftretende Ist-Falzprozesskraft bestimmt wird, und den Punkten der Falzbahn die erfassten Werte für die Falzprozesskraft zugeordnet werden. Die Wertezuordnungen werden vorteilhafterweise gespeichert und aus den gespeicherten Wertezuordnungen ergibt sich dann der Gesamtverlauf der Ist-Falzprozesskraft.

Die Steuereinheit 5 ist weiter ausgebildet, die erfasste Ist-Falzprozesskraft mit einer in der Steuereinheit 5 hinterlegten Soll-Falzprozesskraft zu vergleichen, und Abweichungen zwischen der Ist-Falzprozesskraft und der Soll-Falzprozesskraft zu erfassen. Unter Berücksichtigung dieser erfassten Abweichungen wird unter Nutzung der Steuereinheit 5 ein nachfolgender Falzvorgang derart angepasst, dass der dann erfasste Ist-Falzprozesskraftverlauf weniger von dem Soll-Falzprozesskraftverlauf abweicht, wobei die Steuereinheit 5 bei der Anpassung der von der Falzrolle 1 aufgebrachten Falzprozesskraft durch eine Veränderung der Anstellung der Falzrolle 1 mittels des Roboters 2 vorteilhafterweise auch die mittels der Sensoreinrichtung 6 erfasste Ist-Geometrie eines umgeformten Falzflansches berücksichtigt. Weiter vorteilhaft wird zudem die Ist-Geometrie eines noch ungeformten Falzflansches dabei berücksichtigt, zumindest bei einem initialen Falzvorgang, wenn es mehrere Vorfalzvorgänge geben sollte. Insbesondere ist die Steuereinheit 5 zur Ansteuerung der entsprechenden Aktuatoren des Falzroboters 2 ausgebildet, mittels derer beeinflusst werden kann, wie die Falzrolle 1 auf den umzuformenden Falzflansch wirkt.

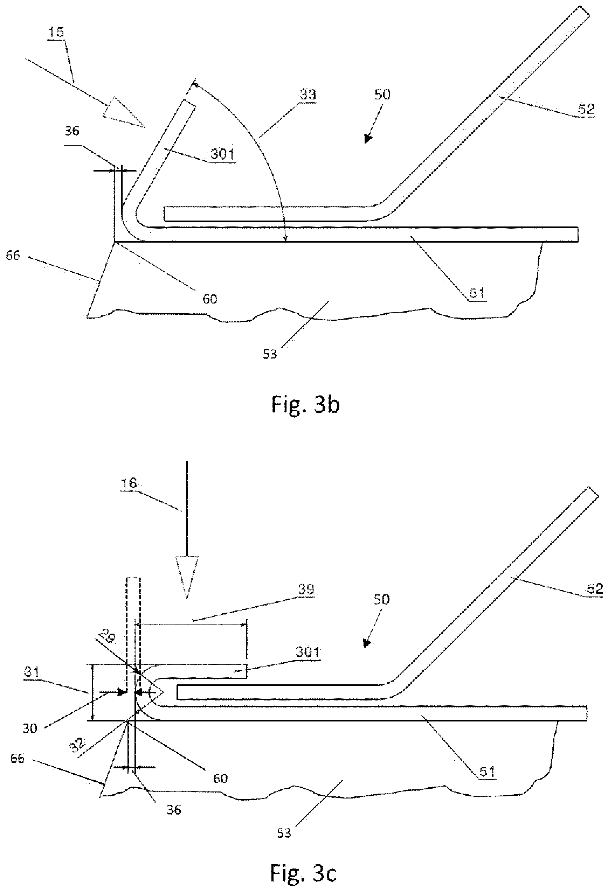

Parameter der Ist-Geometrie eines ungeformten Falzflansches 302 und eines in einem Vorfalzvorgang teilweise umgeformten Falzflansches 301 und eines vollständig umgeformten Falzflansches 301, die vorteilhafterweise als Ist-Geometrie einzeln oder in Kombination erfasst werden sind in Fig. 3a, Fig. 3b und Fig. 3c dargestellt. Fig. 3a bis Fig. 3c zeigen dabei jeweils eine Bauteilanordnung 50 mit einem ersten Bauteil 51 und einem zweiten Bauteil 52, wobei die Bauteilanordnung 50 auf einem Falzbett 53 angeordnet ist. Der in Fig. 3a bis Fig. 3c eingezeichnete Punkt 60 stellt dabei als obere Kante des Falzbetts 53 einen Bezugspunkt dar, in Bezug auf den einige der Parameter erfasst werden. Die Seitenfläche 66 des Falzbetts 53 dient als weitere Referenzfläche bezüglich der erfassten Parameter. Das Erfassen der Parameter kann dabei insbesondere mittels einer entsprechend eingerichteten Messtechnik, insbesondere unter Nutzung eines optischen Messverfahrens, und/oder durch Einlesen von entsprechenden Vorgaben erfolgen, wenn Parameter, wie beispielsweise die Flanschlänge 38, mit geringen Toleranzen vorbekannt sind.

Die Parameter, die in Bezug auf die Bauteilanordnung gemäß Fig. 3a relevant sind, also vor einem Falzvorgang und daher mit einem noch ungeformten Falzflansch 302, sind die Falzlänge 38, das sogenannte Block-Luft-Maß, also der Abstand zwischen dem noch ungeformten Falzflansch 302 und der Endkante des von dem vollständig umgeformten Falzflansch zu umschließenden Abschnitts des zweiten Bauteils 52, der Öffnungswinkel 34, also der Winkel, mit dem der noch ungeformte Falzflansch 302 gegenüber dem an dem zweiten Bauteil 52 anliegenden ersten Bauteil 51 aufgespannten Winkel angestellt ist, und der Außenradius 32, der von dem noch ungeformten Falzflansch 302 und dem an dem zweiten Bauteil 52 anliegenden ersten Bauteil 51 beschrieben wird. Zudem wird die Lage 35 des ungefalzten Bauteils 51 zu dem festgelegten Bezugspunkt 60 erfasst.

Wird in einem Vorfalzschritt mit einer Vorfalzkraft 15 die Bauteilanordnung vorgefalzt, werden nach dem Vorfalzen, wie beispielhaft in Fig. 3b gezeigt, vorteilhafterweise die folgenden weiteren Parameter erfasst, insbesondere der erzielte Vorfalzwinkel 33, also der Winkel, den der nun teilweise umgeformte Falzflansch 301 zu dem an dem zweiten Bauteil 52 anliegenden ersten Bauteil 51 aufweist, und den Einrollwert 30, also den kürzesten Abstand, den die äußerste Stelle des teilweise umgeformten Falzflansches 301 zu einer durch den Bezugspunkt 60 verlaufenden Geraden, die parallel zu dem noch ungeformten Falzflansch 302 verläuft, aufweist.

Ist nach einem Falzschritt mit einer Falzkraft 16 die Bauteilanordnung fertig gefalzt, wie beispielhaft in Fig. 3c gezeigt, so wird der Einrollwert 30 erfasst. Des Weiteren wird die Flanschbreite 39 erfasst, also welche Breite der fertig umgeformte Flansch 301 aufweist. Darüber hinaus wird das Packmaß 31 erfass, also die Gesamtdicke von Bauteil 51 und Bauteil 52 im Bereich des umgeformten Falzflansches 301. Als weiterer Parameter kann der Außenradius mit dem der Falzflansch 301 umgeformt ist, erfasst werden, wobei vorzugsweise die Erfassung für verschiedene Quadranten erfolgt. Vorteilhafterweise wird also für einen ersten Quadranten ein Außenradius 32, mit dem der Falzflansch 301 umgeformt ist, und für einen zweiten Quadranten ein Außenradius 29, mit dem der Falzflansch 301 umgeformt ist, erfasst. Ferner kann die Lage 36 des gefalzten Bauteils 51 zu dem festgelegten Bezugspunkt 60 erfasst werden.

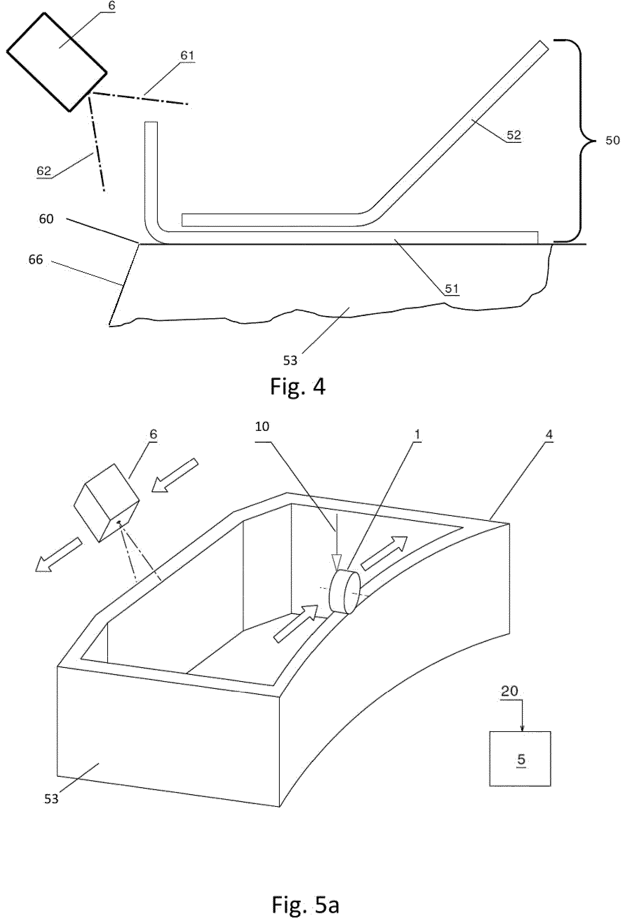

Fig. 4 zeigt ein optisches System 6, mit dem die Ist-Geometrie beispielsweise mittels LaserTriangulation erfasst werden kann (in Fig. 4 symbolisch durch zwei Laserstrahlen 61, 62 dargestellt).

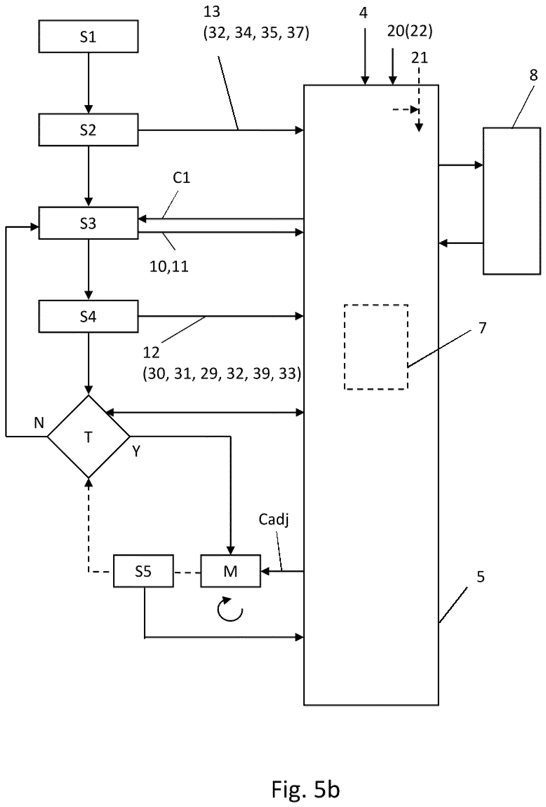

Unter Bezugnahme auf Fig. 5a und Fig. 5b wird nachfolgend ein Ausführungsbeispiel für ein erfindungsgemäß ausgebildetes Rollfalzverfahren zum Falzen einer Mehrzahl von gleichen Bauteilanordnungen 50 erläutert. Wie in Fig. 5a schematisch dargestellt, wird bei dem Rollfalzverfahren eine an einem Roboter (in Fig. 5a nicht dargestellt) angeordnete Falzrolle 1 zur Umformung eines Falzflansches eines Bauteils einer Bauteilanordnung 50 mittels des Roboters entsprechend einem eingestellten Rollfalzprozess mit einer vorgegebenen Falzbahn 4 geführt. Das Verfahren und somit insbesondere der Roboter werden dabei von einer Steuereinheit 5 gesteuert. Damit das Falzergebnis des Rollfalzverfahrens einer vorgegebenen Falzqualität entspricht, ist es erforderlich, den Rollfalzprozess präzise einzustellen. Hierzu ist in diesem Ausführungsbeispiel ein Verfahren zum Einstellen eines Rollfalzprozesses zum Falzen der Mehrzahl von gleichen Bauteilanordnungen 50 vorgesehen, das unter Bezugnahme auf das in Fig. 5b dargestellte Ablaufdiagramm näher erläutert wird. Das Einstellen des Rollfalzprozesses wird dabei unter Nutzung der Steuereinheit 5 gesteuert, die insbesondere als ECU (ECU: electronic control unit) ausgebildet sein kann.

Zum Einstellen des Rollfalzprozesses wird zunächst in einem Schritt S1 eine Bauteilanordnung 50 mit einem ersten Bauteil 51 und einem zweiten Bauteil 52 bereitgestellt, wie diese auch später von dem Rollfalzverfahren in großer Stückzahl bearbeitet werden soll. Für diese Bauteilanordnung 50 wird bei einer Messfahrt S2 die Ist-Geometrie 13 des noch ungeformten Falzflansches 302 erfasst. Die Messfahrt S2 wird dabei in diesem Ausführungsbeispiel mittels des Roboters basierend auf der für die konkrete Bauteilanordnung 50 vorgesehene Falzbahn 4 durchgeführt, wobei ein an dem Roboterfalzkopf des Roboters angeordnetes optisches System für die Ist-Geometrie 13 des noch ungeformten Falzflansches 302 einen Öffnungswinkel 34, eine Flanschlänge 38, ein Block-Luft-Maß 37, einen Außenradius 32 und eine Lage 35 des ungefalzten Bauteils zu einem festgelegten Bezugspunkt als Parameter erfasst und an die Steuereinheit 5 übertragen. Die Falzbahn 4 ist in der Steuereinheit 5 durch eine endliche Anzahl die Falzbahn 4 repräsentierende Punkte beschrieben, wobei jedem Punkt der Falzbahn 4 die für den jeweiligen Punkt erfassten Parameter 32, 34, 35, 37 zugeordnet werden.

In einem nächsten Schritt S3 wird die an dem Roboter angeordnete Falzrolle 1 zur Umformung des Falzflansches des Bauteils der Bauteilanordnung 50 mittels des Roboters entsprechend einer vorgegebenen Falzbahn 4 geführt, wobei der Roboter hierzu von der Steuereinheit 5 mit einem von der Steuereinheit 5 generiertem Steuerungssignal C1 gesteuert wird. Das Steuerungssignal C1, das auch als eine Folge von Steuerungssignalen für einen vollständigen Falzumlauf gemäß der Falzbahn 4 bezeichnet werden kann, beruht dabei insbesondere auf einer der Steuereinheit 5 vorgegebenen Falzbahn 4, einer der Steuereinheit 5 vorgegebenen Soll-Falzqualität 20, die in diesem Ausführungsbeispiel durch eine Soll-Geometrie des fertig umgeformten Falzflansches mit den folgenden Parametern definiert wird: Flanschbreite 39, Packmaß 31, Lage 36 des gefalzten Bauteils zu einem festgelegten Bezugspunkt, Einrollwert 30, Außenradius 32 für einen ersten Quadranten und einen Außenradius 29 für einen zweiten Quadranten. Die Parameter für die Soll-Geometrie des umgeformten Falzflansches sind dabei für die gesamte Falzbahn 4 jeweils einem zugehörigen Punkt der Falzbahn 4 zugeordnet. Das Steuerungssignal C1 gibt dabei unter anderem eine zu erreichende Soll-Falzprozesskraft 21 vor, mit der die Falzrolle 1 während des Umformens auf den Falzflansch wirken soll. Die Soll-Falzprozesskraft 21 kann der Steuereinheit initial für jeden Punkt der Falzbahn 4 vorgegeben werden und wird dann im späteren Verfahren von der Steuereinheit 5 für jeden Punkt der Falzbahn 4 selbst bestimmt. Insbesondere kann aber auch vorgesehen sein, dass unter Berücksichtigung eines in der Steuereinheit 5 hinterlegten Steifigkeitsmodell 7 die Soll-Falzprozesskraft 21 auch initial von der Steuereinheit 5 bestimmt wird, wobei das Steifigkeitsmodell 7 insbesondere die Robotergeometrie und Robotereigenschaften bis hin zu der Falzrolle, insbesondere sich über die Falzbahn ändernde Steifigkeiten des Roboters und daraus resultierende sich ändernde Federkonstanten des Roboters, berücksichtigt.

Während der Umformung des Falzflansches in dem Schritt S3 wird zudem die von dem Roboter ausgeübte und auf die Falzrolle 1 während des Falzens entlang der Falzbahn 4 wirkende Ist-Falzprozesskraft 10 erfasst und die erfasste Falzprozesskraft 10 an die Steuereinheit 5 übertragen. Dabei wird für jeden Punkt der Falzbahn 4 die an diesem Punkt erfasste Ist-Falzprozesskraft 10 zugeordnet. Des Weiteren wird während der Umformung eine Ist-Falzbahn 11 der Falzrolle 1 erfasst und an die Steuereinheit 5 übertragen. Die Punkte der Falzbahn und die zu den Punkten jeweils erfassten Parameter können vorteilhafterweise jeweils als Werte-Tupel erfasst werden. Die Steuereinheit 5 arbeitet insofern insbesondere mit Verschiebungen der Falzbahn als Eingangsgröße.

Nachdem ein Falzvorgang entlang der vollständigen Falzbahn 4 abgeschlossen ist, wobei in diesem Ausführungsbeispiel als Falzvorgang ein Fertigfalzvorgang vorgesehen ist (alternativ könnte aber auch ein Vorfalzvorgang vorgesehen sein), erfolgt eine Messfahrt S4, mit der mittels des an dem Roboterfalzkopf angeordneten optischen Systems die Ist-Geometrie 12 des umgeformten Falzflansches erfasst wird. Dazu werden die folgenden Parameter erfasst und an die Steuereinheit 5 übertragen: ein Einrollwert 30, ein Packmaß 31, ein Außenradius 32 für einen ersten Quadranten, einen Außenradius 29 für einen zweiten Quadranten. Die Parameter werden dabei ebenfalls jeweils einem zugehörigen Punkt der Falzbahn 4 zugeordnet. In einer Ausgestaltungsvariante des Verfahrens, bei der ein Falzvorgang auch ein Vorfalzvorgang sein kann, wird als Parameter der Ist-Geometrie 12 des umgeformten Falzflansches insbesondere auch ein erzielter Vorfalzwinkel 30 erfasst.

Nach der Messfahrt S4 wird in einem Schritt T von der Steuereinheit 5 bewertet, ob die erfasste Ist-Geometrie 12 der vorgegebenen Soll-Geometrie 22 entspricht, wobei die Ist-Geometrie 12 der vorgegebenen Soll-Geometrie 22 bereits dann entspricht, wenn die Ist-Geometrie 12 innerhalb definierter Toleranzbänder von der Soll-Geometrie 22 abweicht. Entspricht die erfasste Ist-Geometrie 12 nicht der Soll-Geometrie 22 (in Fig. 5b mit "N" bezeichnet), so wird durch eine entsprechend veränderte Ansteuerung des Roboters für eine neue, aber gleiche Bauteilanordnung in einem Schritt S3 erneut ein Falzvorgang durchgeführt, wobei eine Anstellung der Falzrolle 1 mittels des Roboters durch ein angepasstes Steuerungssignal C1 variiert wird. Das Steuerungssignal C1 wird dabei zur Erreichung der Soll-Falzqualität 20, hier also zur Erreichung der Soll-Geometrie 22, unter Berücksichtigung der erfassten Ist-Falzprozesskraft 10, der erfassten Ist-Falzbahn 11 und der erfassten Ist-Geometrie 12 des umgeformten Falzflansches angepasst. Die bei einem Falzvorgang erfassten Ist-Größen, insbesondere die Parameter der Ist-Geometrie 12 des umgeformten Falzflansches, werden also in einem nachfolgenden weiteren Falzvorgang an die Soll-Größen, insbesondere die Parameter der Soll-Geometrie 22 für einen umgeformten Falzflansch, herangeführt.

Nach der Ausführung des Schrittes S3 erfolgt wiederum eine Messfahrt S4 und eine Bewertung des Falzergebnisses in einem Schritt T. Solange diese Bewertung in dem Schritt T ergibt, dass die erfasste Ist-Geometrie12 nicht der Soll-Geometrie 22 entspricht (N), wiederholen sich die Schritte. Ergibt die Bewertung T hingegen, dass die erfasste Ist-Geometrie 12 des umgeformten Falzflansches der Soll-Geometrie 22 für einen umgeformten Falzflansch entspricht (in Fig. 5b mit "Y" bezeichnet), ist der Rollfalzprozess eingestellt, insbesondere für ein nachfolgendes Rollfalzen in einem Schritt M. Bei diesem Rollfalzen M wird jeweils eine gleiche Bauteilanordnung mit den in den vorgelagerten Verfahrensschritten eingestellten Steuerungssignal Cadj durchgeführt. Nachdem eine vorgegebene Anzahl von gleichen Bauteilanordnungen in einem Schritt M gefalzt wurden, wobei die Anzahl beispielsweise 200 betragen kann, kann zur Qualitätssicherung eine Messfahrt S5 durchgeführt werden, wobei dann in dem Schritt T wiederum bewertet wird, ob eine erfasste Ist-Geometrie 12 des umgeformten Falzflansches weiterhin der Soll-Geometrie 22 für einen umgeformten Falzflansch entspricht. Ist das der Fall (Y) so wird das Rollfalzverfahren mit dem Schritt M weiter unverändert ausgeführt. Sollte die Ist-Geometrie 12 des umgeformten Falzflansches dagegen nicht mehr der Soll-Geometrie 22 für den umgeformten Falzflansch entsprechen (N), so werden erneut die Schritte S3, S4 und T ausgeführt. Der Rollfalzprozess wird somit wieder eingestellt.

Gemäß einer Ausgestaltungsvariante des unter Bezugnahme auf Fig. 5b beschriebenen Verfahrens kann der Falzprozess zusätzlich in einem rechnergestützten Simulationsmodell 8 simuliert werden. Das Simulationsmodell 8 berücksichtigt dabei die materialspezifischen Parameter der Bauteilanordnung, die Bauteilabmessung und Bauteilgeometrie vor dem Falzen und arbeitet mit Kräften als Eingangsgröße, wohingegen die Steuereinheit 5 zur Steuerung des Roboters 2 vorteilhafterweise mit Verschiebungen in Bezug auf die Falzbahn als Eingangsgröße arbeitet. Dazwischen "vermittelt" vorteilhafterweise das Steifigkeitsmodell 7. Die während der Messfahrten S2, S4, S5 erfassten und an die Steuereinheit 5 übertragenen Ist-Größen werden dabei von der Steuereinheit 4 an das Simulationsmodell 8 weitergeleitet. Diese realen Ist-Größen werden dann von dem Simulationsmodell 8 für die Durchführung von Simulationen des Falzprozesses verwendet, wobei unter Berücksichtigung dieser realen Ist-Größen und der zu erreichenden Soll-Geometrie 22 eine mit dem Roboter umzusetzende Anstellung der Falzrolle 1 simuliert wird, bis die Soll-Geometrie in dem Simulationsmodell 8 erreicht ist. Vorteilhafterweise wird dann mit der in dem Simulationsmodell simulierten Anstellung der Falzrolle 1, also einem entsprechend angepassten Steuerungssignal C1, der nächste reale Falzvorgang in dem Schritt S3 durchgeführt. Ergibt dann nach der Messfahrt S4 und der Bewertung T, dass eine Soll-Falzqualität nicht erreicht ist, wird vorteilhafterweise unter Berücksichtigung der bei der Messfahrt erfassten Ist-Größen und der beim Falzen im Schritt S3 erfassten Ist-Falzprozesskraft das Simulationsmodell 8 angepasst. Vorteilhafterweise kann durch die rechnergestützten Simulationen die Anzahl der realen Falzvorgänge gemäß Schritt S3 und Messfahrten gemäß S4 reduziert werden, was das Einstellen des Rollfalzprozesses weiter kostengünstiger und schneller macht.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Falzrolle
- 2: Roboter
- 201: Roboterglied
- 202: Roboterglied
- 3: Falzflansch
- 301: umgeformter Falzflansch
- 302: ungeformter Falzflansch
- 4: Falzbahn
- 5: Steuereinheit
- 6: optisches System
- 7: Steifigkeitsmodell
- 8: Simulationsmodell
- 10: Ist-Falzprozesskraft
- 11: Ist-Falzbahn
- 12: Ist-Geometrie eines umgeformten Falzflansches (301)
- 13: Ist-Geometrie für einen noch ungeformten Falzflansch (302)
- 15: Vorfalzkraft
- 16: Fertigfalzkraft
- 20: Soll-Falzqualität
- 21: Soll-Falzprozesskraft
- 22: Soll-Geometrie
- 29: Außenradius im Quadrant 2
- 30: Einrollwert
- 31: Packmaß
- 32: Außenradius im Quadrant 1
- 33: erzielter Vorfalzwinkel
- 34: Öffnungswinkel
- 35: Lage des ungefalzten Bauteils zu einem festgelegten Bezugspunkt
- 36: Lage des gefalzten Bauteils zu einem festgelegten Bezugspunkt
- 37: Block-Luft-Maß
- 38: Flanschlänge
- 39: Flanschbreite
- 40: Roboterfalzkopf
- 41: Anbindungselement
- 42: Verbindungselement
- 43: Kopfelement
- 44: Messkörper
- 45: Sensor
- 50: Bauteilanordnung
- 51: erstes Bauteil
- 52: zweites Bauteil
- 53: Falzbett
- 60: Bezugspunkt
- 61: Laserstrahl
- 62: Laserstrahl
- 66: Referenzfläche
- 100: Rollfalzvorrichtung
- S1: Bereitstellung einer Bauteilanordnung, wie zur Serienfertigung vorgesehen
- S2: Messfahrt zur Erfassung der Ist-Geometrie eines ungeformten Falzflansches
- S3: Durchführung eines Falzvorgangs entsprechend einer Vorgabe
- S4: Messfahrt zur Erfassung der Ist-Geometrie eines umgeformten Falzflansches
- S5: Messfahrt zur Erfassung der Ist-Geometrie eines umgeformten Falzflansches im eingestellten Rollfalzprozess
- T: Bewertung, ob die erfasste Ist-Falzqualität der vorgegebenen Soll-Falzqualität entspricht
- M: Durchführung eines Falzvorgangs bei fertig eingestelltem Rollfalzprozess
- C1: Steuerungssignal
- Cadj: eingestelltes Steuerungssignal

## Patentansprüche

1. Verfahren zum Einstellen eines Rollfalzprozesses zum Falzen einer Mehrzahl von gleichen Bauteilanordnungen (50), wobei eine an einem Roboter (2) angeordnete Falzrolle (1) zur Umformung eines Falzflansches (3) eines Bauteils einer Bauteilanordnung (50) mittels des Roboters (2) entsprechend einer vorgegebenen Falzbahn (4) geführt wird, wobei der Roboter (2) zur Beeinflussung einer Falzqualität des umgeformten Falzflansches (301) mittels einer Steuereinheit (5) gesteuert werden kann, wobei eine während der Umformung von dem Roboter (2) auf die Falzrolle (1) wirkende Ist-Falzprozesskraft (10) erfasst wird, und die Falzprozesskraft (10) durch eine entsprechende Ansteuerung des Roboters (2) mittels der Steuereinheit (5) verändert werden kann, wobei eine zu erreichende Soll-Falzqualität (20) vorgegeben wird, **dadurch gekennzeichnet, dass** der Roboter (2) zur Erreichung der Soll-Falzqualität (20) unter Berücksichtigung der erfassten Ist-Falzprozesskraft (10) und einer aus der Umformung resultierenden Ist-Geometrie (12) eines umgeformten Falzflansches (301) von der Steuereinheit (5) gesteuert wird.

2. Verfahren nach Anspruch 1, **dadurch gekennzeichnet, dass** während der Umformung des Weiteren die Falzbahn (4) erfasst wird.

3. Verfahren nach Anspruch 1 oder Anspruch 2, **dadurch gekennzeichnet, dass** die Falzbahn (4) für die Steuerung des Roboters (2) mittels der Steuereinheit (5) durch eine endliche Anzahl die Falzbahn (4) repräsentierende Punkte beschrieben wird, wobei
jedem Punkt der Falzbahn (4) eine Soll-Falzprozesskraft (21) zugeordnet wird;
jedem Punkt der Falzbahn (4) die an diesem Punkt erfasste Ist-Falzprozesskraft (10) zugeordnet wird; jedem Punkt der Falzbahn (4) eine Soll-Geometrie (22) für einen umgeformten Falzflansch (301) zugeordnet wird; und
jedem Punkt eine an diesem Punkt erfasste Ist-Geometrie (12) eines umgeformten Falzflansches (301) zugeordnet wird.

4. Verfahren nach einem der vorstehenden Ansprüche, **gekennzeichnet durch** eine Erfassung einer Ist-Geometrie (13) für einen noch ungeformten Falzflansch (302) vor einer Umformung des Falzflansches (3), wobei die Geometrie (301, 302) insbesondere mittels eines optischen Systems (6) und/oder mittels eines haptischen Systems erfasst wird.

5. Verfahren nach einem der vorstehenden Ansprüche, **dadurch gekennzeichnet, dass** aus der erfassten Ist-Falzprozesskraft (10) und aus der erfassten Ist-Geometrie (13) eine Ist-Falzbahn (11) bestimmt wird; und/oder **dass** messtechnisch eine Ist-Falzbahn (11) bestimmt wird.

6. Verfahren nach einem der vorstehenden Ansprüche, **dadurch gekennzeichnet, dass** der Roboter (2) einen Roboterfalzkopf (40) mit einem Anbindungselement (41), einem Verbindungselement (42) und einem Kopfelement (43), an dem die Falzrolle (1) angeordnet ist, wobei das Verbindungselement (42) zwischen dem Anbindungselement (41) und dem Kopfelement (43) angeordnet ist, wobei zumindest ein Teil des Verbindungselements (42) als Messkörper (44) ausgestaltet ist, wobei der Messkörper (44) mit wenigstens einem an dem Messkörper (44) angeordneten Sensorelement die Ist-Falzprozesskraft (10) erfasst.

7. Verfahren nach einem der vorstehenden Ansprüche, **dadurch gekennzeichnet, dass** für die Geometrie (12, 13) des Falzflansches (3) wenigstens eines der nachfolgend genannten Kriterien erfasst wird: ein Einrollwert (30); ein Packmaß (31); ein Außenradius (32); ein erzielter Vorfalzwinkel (33); ein Öffnungswinkel (34); eine Lage des ungefalzten Bauteils zu einem festgelegten Bezugspunkt (35); eine Lage des gefalzten Bauteils zu einem festgelegten Bezugspunkt (36); ein Block-Luft-Maß (37); eine Flanschlänge (38); eine Flanschbreite (39).

8. Verfahren nach einem der vorstehenden Ansprüche, **dadurch gekennzeichnet, dass** zur Erreichung der Soll-Falzqualität (20) eine Anstellung der Falzrolle (1) mittels des Roboters (2) variiert wird.

9. Verfahren nach einem der vorstehenden Ansprüche, **dadurch gekennzeichnet, dass** die bei einem ersten Falzvorgang erfassten Ist-Größen (10, 11, 12) in einem nachfolgenden zweiten Falzvorgang an die Soll-Größen (20, 21, 22) herangeführt werden.

10. Verfahren nach einem der vorstehenden Ansprüche, **dadurch gekennzeichnet, dass** unter Berücksichtigung während eines ersten Falzvorgangs erfasster Ist-Größen (10, 11, 12) für bereits gefalzte Punkte der Falzbahn (4) für nachfolgende Punkte der Falzbahn (4) der Roboter (2) derart gesteuert wird, dass die Differenz zwischen Ist-Größen (10, 11, 12) und Soll-Größen (20, 21, 22) verringert wird.

11. Verfahren nach einem der vorstehenden Ansprüche, **dadurch gekennzeichnet, dass** der Falzprozess zusätzlich in einem rechnergestützten Simulationsmodell (8) simuliert wird, wobei erfasste Ist-Größen (10, 11, 12) an das Simulationsmodell (8) übergeben werden, und dem Simulationsmodell (8) zugrunde gelegte Größen für die Ist-Größen durch die übergebenen Ist-Größen (10, 11, 12) ersetzt werden, unter Berücksichtigung dieser Ist-Größen (10, 11, 12) und der zu erreichenden Soll-Falzqualität (20) eine mit dem Roboter (2) umzusetzende Anstellung der Falzrolle (1) simuliert wird, bis die Soll-Falzqualität (20) in dem Simulationsmodell (8) erreicht ist, und mit dieser simulierten Anstellung der Falzrolle (1) der nächste Falzvorgang durchgeführt wird.

12. Verfahren nach Anspruch 11, **dadurch gekennzeichnet, dass** von dem rechnergestützten Simulationsmodell (8) bestimmte Simulationswerte als initiale Prozessführungsparameter (4, 21) für das Verfahren zum Einstellen eines Rollfalzprozesses vorgegeben werden.

13. Verfahren nach einem der vorstehenden Ansprüche, **dadurch gekennzeichnet, dass** das Verfahren als Verfahren zur Optimierung einer Falzqualität und/oder als Zwischenverfahren zur Sicherstellung einer Falzqualität durchgeführt wird.

14. Rollfalzverfahren zum Falzen einer Mehrzahl von gleichen Bauteilanordnungen (50), wobei eine an einem Roboter (2) angeordnete Falzrolle (1) zur Umformung eines Falzflansches (3) eines Bauteils einer Bauteilanordnung (50) mittels des Roboters (2) entsprechend einem eingestellten Rollfalzprozess mit einer vorgegebenen Falzbahn (4) geführt wird, **dadurch gekennzeichnet, dass** der Rollfalzprozess gemäß einem Verfahren nach einem der vorstehenden Ansprüche eingestellt wird.

15. Rollfalzvorrichtung (100) umfassend einen Falzroboter (2) mit wenigstens einer an einem Roboterfalzkopf (40) angeordneten Falzrolle (1), eine Steuereinheit (5), und eine Messtechnik (6, 44), **dadurch gekennzeichnet, dass** die Rollfalzvorrichtung (100) zur Ausführung eines Verfahrens nach einem der vorstehenden Ansprüche ausgebildet ist.
